Europäisches Patentamt

European Patent Office

Office européen des brevets

(19)

(11) Publication number: **0 178 817**
A2

# (12) EUROPEAN PATENT APPLICATION

(21) Application number: 85306984.7

(22) Date of filing: 30.09.85

(51) Int. Cl.⁴: **B 60 T 8/32**

(30) Priority: 11.10.84 GB 8425675
20.03.85 GB 8507164

(43) Date of publication of application:
23.04.86 Bulletin 86/17

(84) Designated Contracting States:
DE FR IT

(71) Applicant: LUCAS INDUSTRIES public limited company
Great King Street
Birmingham, B19 2XF West Midlands(GB)

(72) Inventor: Farr, Glyn Phillip Reginald
21 The Hamlet Leek Wootton
Warwickshire(GB)

(74) Representative: Spall, Christopher John et al,
BARKER, BRETTELL & DUNCAN 138 Hagley Road
Edgbaston Birmingham B16 9PW(GB)

(54) Improvements in hydraulic anti-skid systems for vehicles.

(57) In an hydraulic braking system for a four-wheel vehicle a modulator (12, 16) fitted to each front wheel (1, 2) also modulates the supply of fluid to the brake (7, 8) on one rear wheel (3, 4). Each modulator (12,16) incorporates a pump which is driven from a corresponding front wheel and which is adapted to generate a pressure for re-applying the brake on the respective front and rear wheels. Since the pump can only generate a re-application pressure up to the value at which the immediately preceding front wheel lock occurred, by arranging for the front wheels to lock before the rears, the rear wheels will continue to rotate and thus provide the vehicle the with directional stability.

FIG.1.

IMPROVEMENTS IN HYDRAULIC ANTI-SKID SYSTEMS FOR VEHICLES

This invention relates to hydraulic anti-skid systems for a vehicle of the four wheel type in which the behaviour of a braked wheel is sensed by skid sensing means and at a skid point is operative to actuate an anti-skid modulator for modulating the supply of brake-applying fluid to the brake of that wheel.

In one known anti-skid braking system of the kind set forth, forming the subject of GB 1 193 269, a modulator is fitted to each front wheel brake, and each modulator also modulates the supply of fluid to the brake on a rear wheel, preferably the diagonally opposite rear wheel, to ensure that under most conditions one front wheel will be steerable, thereby providing the vehicle with steerability, and one rear wheel will be rotatable, thereby providing the vehicle with directional stability. The vehicle is arranged so that the braking ratio of the front brakes to the rear brakes ensures that the front brakes will always lock first.

Each modulator embodied in the system of GB 1 193 269 is of the type said to be "time dependant". That is to say each modulator incorporates means which, following correction of a skid, automatically increases the re-application pressure to that of full master cylinder pressure in a minimum time interval, or "time out" period. Specifically, each modulator incorporates a cut-off valve which is disposed in the line between the master cylinder and the brakes on the respective pair of front and rear wheels. The cut-off valve is normally urged into an open position to provide unrestricted communication between the master cylinder and the respective brakes by means of a spring acting through a push-rod and, in response to skid signal, the valve is adapted to close to isolate the master cylinder from the brakes by the generation of a brake-pressure relieving force which withdraws the push-rod away from the valve against the spring-loading with subsequent movement of the push-rod in the same direction acting to withdraw fluid from the brake line, thereby reducing the pressure applied to the brakes. Should the vehicle be on a very slippery surface so that the wheel does not recover and the anti-lock device is inoperative then, at the termination of the skid signal, the brake-pressure relieving force is dissipated, and the spring is operative to open the cut-off valve, whereby full master cylinder pressure is applied to the brakes. This full pressure may exceed the pressure applied to the brakes when the skid occurred. Not only can re-application of such full pressure cause the front wheel to lock again, but the magnitude of that pressure, having regard to the nature of the surface over which the vehicle is travelling, may also be sufficient to cause the rear wheel of that pair to lock.

According to our invention in an hydraulic anti-skid system of the kind set forth a modulator is fitted to each front wheel brake, and each modulator also modulates the supply of fluid to the brake on one rear wheel, each modulator incorporating a pump which is driven from a corresponding front wheel of the vehicle and which is adapted to generate a pressure for re-applying the brakes on the respective pair of front and rear wheels, whereby following correction of a skid, the pump can only generate a re-application pressure up to a value at which the immediately preceding front wheel lock occurred.

We arrange that the front wheels lock before the rears. This ensures that for normal braking, when the front wheels lock, the rear wheels will continue to rotate and thus provide the vehicle with directional stability.

Since the pump is unable to generate a re-application pressure in excess of the value at which the previously corrected front wheel lock had occurred there is no possibility whatsoever of the rear wheels being locked when the brakes are re-applied following correction of a skid.

The rate of increase in re-application pressure generated by the pump following correction of a skid is determined by the angular velocity of the front wheel, until the pressure attains a predetermined maximum value.

This has a number of advantages, namely:

1. If the surface over which the front wheel is travelling is slippery and a deep skid occurs, the wheel recovery is assisted by the slow pressure rise rate;

2. Should the vehicle, on wet ice, with the front wheels locked, pass onto an improved surface, the front wheels can be accelerated, by increased road friction overcoming the low brake torque, and control is regained.

Under similar conditions, those systems which permit full brake application after the "time out" period will not recover because the wheels cannot accelerate, to give a speed signal, with applied pressure in the brakes.

One embodiment of our invention is illustrated in the accompanying drawings in which:-

Figure 1 is a layout of an hydraulic anti-skid braking system for a four wheel vehicle;

4

Figure 2 is a graph of front and rear wheel speed, and the pressure of a front wheel brake, plotted against time, for a vehicle travelling over a surface of a high co-efficient of friction;

Figure 3 is a graph similar to Figure 2 with the vehicle travelling over a surface of a medium or intermediate co-efficient of friction;

Figure 4 is a graph similar to Figures 2 and 3 with the vehicle travelling over a surface of very low co-efficient of friction followed by a surface of low co-efficient of friction; and

Figure 5 is a layout similar to Figure 1, but showing a modified hydraulic anti-skid braking system.

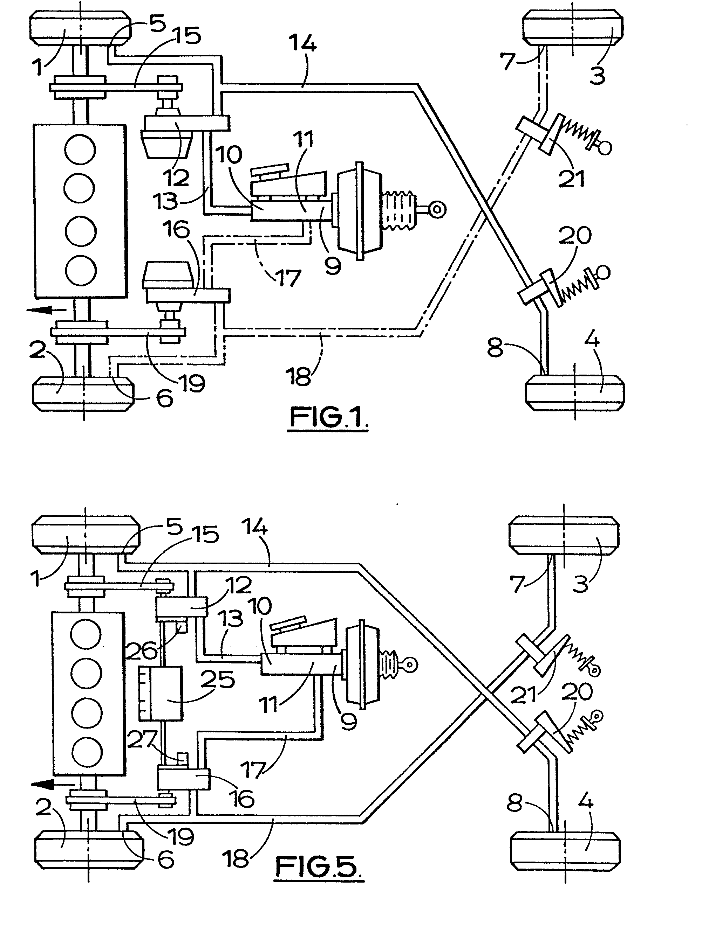

The braking system illustrated in the layout of Figure 1 comprise two separate hydraulic brake-applying circuits for a vehicle of a front wheel drive type having two front wheels 1, 2 and two rear wheels 3, 4.

The wheels 1 and 2 are adapted to be braked by respective brakes 5 and 6, and the wheels 3 and 4 by respective brakes 7 and 8.

A pedal-operated master cylinder 9 has two pressure spaces 10 and 11.

The pressure space 10 is connected to a brake-pressure modulator 12 through a pipe-line 13 and the modulator 12, in turn, is connected to the brake 5 on the front wheel 1 and to the brake 8 on the diagonally opposite rear wheel 4 through a common pipe-line 14. The modulator 12 is driven through a drive 15 from the front wheel 1.

The pressure space 11 is connected to a brake-pressure modulator 16 through a pipe-line 17, and the modulator 16, in turn, is connected to the brake 7 on the diagonally opposite rear wheel 3 through a common pipe-line 18. The modulator 16 is driven through a drive 19 from the front wheel 2.

Each modulator 12, 16 may conveniently be of the kind forming the subject of our G.B. Patent Application No. 8405903, or our G.B. Patent Application No. 8416991 or of similar construction to GB 8416991, in which the skid sensing means comprises a flywheel mechanism also driven through the respective drive 15 or 19.

A brake-pressure apportioning valve 20 is positioned in the pipe-line 14 between the modulator 12 and the brake 8, and a brake-pressure apportioning valve 21 is positioned in the pipe-line 18 between the modulator 16 and the brake 7. The valves 20 and 21 are incorporated to ensure that the front wheels 1, 2 will lock before the rear wheels 3, 4, for given co-efficients of friction of the linings.

The behaviour of the front wheels 1, 2 namely deceleration and/or slip, is sensed by sensing means in the modulators 12 and 16 which emit skid signals, suitably flywheel mechanisms, and the skid signals are operative to operate dump valves in the modulators in order to relieve the pressure of fluid supplied to the brakes.

Each modulator 12, 16 incorporates an hydraulic pump driven by the respective drive 15, 19 to achieve brake re-application following correction of a skid. The pump operates as described in GB 8416991, preferably in conjunction with flow-control regulator valve to control the rate of brake re-application, with the pump being strangled to give a constant output above a predetermined speed of rotation of the wheel. The pump can only generate a re-application pressure up to a value at which an immediately preceding front wheel lock occurred because the wheel itself is locked, and the pump is driven from the wheel.

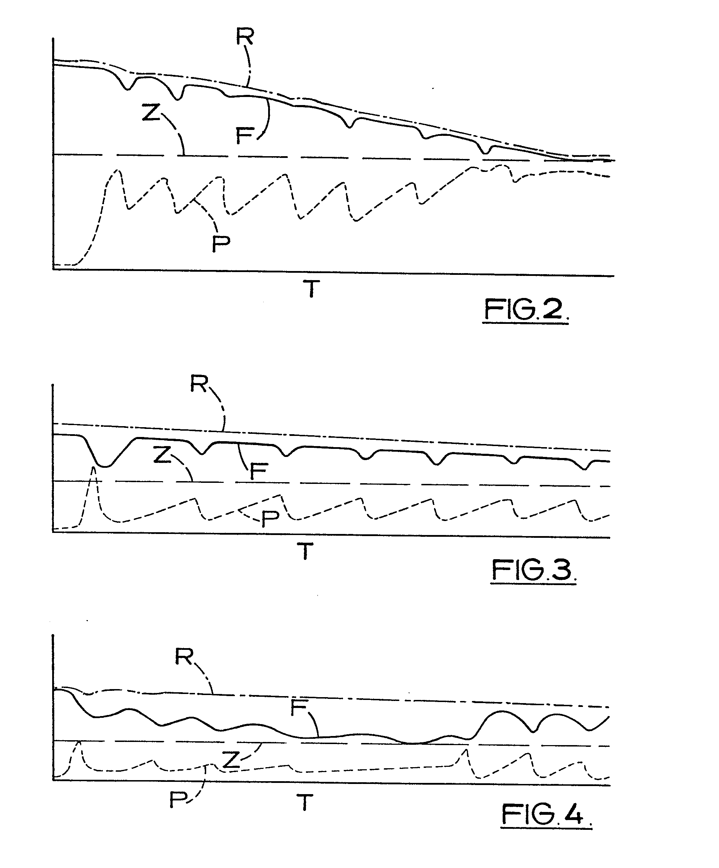

In the graphs of Figures 2, 3 and 4, rear wheel speed (R) is depicted by a chain dotted line, front wheel speed (F) by a continuous line, zero wheel speed by a broken line, front brake pressure by a dotted line, and time along the horizontal axis by (T).

The graph of Figure 2 illustrates the behaviour of one front wheel and its diagonally opposite rear wheel.

When the vehicle is travelling over a surface of high friction say .8 at, say, 50 KPH, and the master cylinder 9 is operated to apply the brakes, as shown in the graph of Figure 2, the vehicle is decelerated to rest with the rear wheel speed shown above the front wheelspeed.

As shown in the graph of Figure 3, with the vehicle travelling over a surface of medium friction, say .3 at, say, 30 KPH and with the brake applied rapidly, an overshoot in front brake pressure generates a first deep skid. As can be seen, the resulting reduction in brake re-application rate under the control of the pump, permits the front wheel to recover its true speed and the magnitude of re-application pressure does not approach the pressure at the skid point. It will be noted that the rear wheel continues to rotate when the front wheel has locked, and during all stages of brake re-application.

The graph of Figure 4 shows the system performance stopping from say 30 KPH on a surface of, say, $\mu$.05 followed by a transition to surface of higher , suitably a road surface of say .2 . In this case, the initial surface is so slippery, and the front wheels cascade down to eventual lock, but the rears continue to rotate. The brake re-application pressure is held low by the lock front wheel. The transition to the surface of higher $\mu$ permits the front wheels to recover, and the modulator regains control of wheel speed and brake pressure level.

In the braking system illustrated in the layout of Figure 5 each modulator 12, 16 may conveniently be of the kind forming the subject of our G.B. Application No. 8327968. In that construction a skid sensing means comprises a solenoid-operated dump valve assembly responsive to electrical signals from a controller 25 which, in turn, is responsive to signals from means sensing the behaviour of a respective braked front wheel 1 or 2, suitably an opto-sensor 26, 27. Each modulator is otherwise similar in construction to the modulators described above with reference to Figure 1, namely that each modulator incorporates an hydraulic pump driven by the respective drive 15, 19 to achieve brake re-application following correction of a skid, as described above.

The construction and operation of the braking system of Figure 5 is otherwise the same as that of

8

Figure 1 and corresponding reference numerals have been applied to corresponding parts.

CLAIMS

1. An hydraulic anti-skid braking system for a vehicle of the four wheel type in which the behaviour of a braked wheel (1,2,3,4) is sensed by skid sensing means and at a skid point is operative to actuate an anti-skid modulator (12,16) for modulating the supply of brake-applying fluid to the brake of that wheel,characterised in that a modulator (12,16) is fitted to each front wheel brake (5,6), and each modulator also modulates the supply of fluid to the brake on one rear wheel (4,3), each modulator incorporating a pump which is driven from a corresponding front wheel of the vehicle and which is adapted to generated a pressure for re-applying the brakes on the respective pair of front and rear wheels, whereby following correction of a skid, the pump can only generate a re-application pressure up to a value at which the immediately preceding front wheel lock occurred.

2. A system according to claim 1, characterised in that the front wheels (1,2) are arranged to lock before the rear wheels (3,4) so that should the front wheels lock the rears will continue to rotate.

3. A system according to claim 1 or claim 2, characterised in that each modulator (12,16) modulates the supply of fluid to one front wheel brake (5,6) and to the brake (8,7) on the diagonally opposite rear wheel (4,3), and a brake-pressure apportioning valve (20,21) is positioned in a pipe-line (14,18) between each modulator and the brake on the respective rear wheel.

4. A system according to any preceding claim in which the pump is strangled to give a constant output above a predetermined speed of rotation of the wheel.

5. A system according to any preceding claim, characterised in that the skid sensing means comprises a flywheel mechanism associated with each modulator.

6. A system according to any of claims 1 to 4, characterised in that the skid sensing means comprises a solenoid-operated dump valve assembly responsive to electrical signals from a controller (25) which, in turn, is responsive to signals from the skid sensing means (26,27) sensing the behaviour of a respective braked front wheel (1,2).

0178817

FIG.1.

FIG.5.

2/2

0178817

FIG.2.

FIG.3.

FIG.4.